## Europäisches Patentamt
## European Patent Office
## Office européen des brevets

(11) Veröffentlichungsnummer: **0 211 090 B1**

(12) **EUROPÄISCHE PATENTSCHRIFT**

(45) Veröffentlichungstag der Patentschrift:
**23.08.89**

(51) Int. Cl.⁴: **F16D 3/72**

(21) Anmeldenummer: **85109402.9**

(22) Anmeldetag: **26.07.85**

(54) Verfahren zur Herstellung eines biegeelastischen Kupplungselementes einer Drehmomentübertragungseinrichtung.

(43) Veröffentlichungstag der Anmeldung:
**25.02.87 Patentblatt 87/9**

(45) Bekanntmachung des Hinweises auf die Patenterteilung:
**23.08.89 Patentblatt 89/34**

(84) Benannte Vertragsstaaten:
**CH DE FR GB IT LI NL SE**

(56) Entgegenhaltungen:
**EP-A- 0 026 681
FR-A- 2 148 901
LU-A- 53 401
US-A- 3 959 988**

(73) Patentinhaber: **BHS-Bayerische Berg-, Hütten- und Salzwerke Aktiengesellschaft, Nymphenburger Strasse 120, D-8000 München 19(DE)**

(72) Erfinder: **Heidrich, Günther, Ortwanger Esch 14, D-8978 Burgberg(DE)**

(74) Vertreter: **Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86(DE)**

## Beschreibung

Die Erfindung betrifft ein Verfahren zur Herstellung eines biegeelastischen Kupplungselements einer Drehmomentübertragungseinrichtung, bei dem zwei Membranscheiben in axialer Richtung miteinander fluchtend derart gegeneinandergelegt werden, daß sie im radial äußeren Randbereich mit achsnormalen, an die zugehörigen Außenumfangsflächen angrenzenden Kontaktflächen aneinander anliegen, und bei dem anschließend diese beiden Kontaktflächen im Elektronenstrahlschweißverfahren miteinander verschweißt werden.

Man nennt solche Kupplungselemente, gelegentlich auch die durch die Anschlußteile ergänzten Kupplungselemente, in der Fachsprache auch Membrankupplungen.

Eine solche Membrankupplung ist aus der europäischen Offenlegungsschrift 0 026 681 bekannt. Bei dieser Membrankupplung ist über die Art der Verbindung der Membranscheiben in ihren radial äußeren Randbereichen keine Aussage gemacht.

Üblicherweise werden bei Membrankupplungen die Membranscheiben in ihren radial äußeren Randbereichen durch Bolzen miteinander verbunden, wie dies z.B. aus der CH-A 484 376 bekannt ist. Dabei sind die Bolzen über den Umfang der radial äußeren Randbereiche verteilt. Diese bekannte Ausführungsform erfordert eine sehr sorgfältige und damit zeitaufwendige Montage, insbesondere wenn mit hohen Drehzahlen und deshalb mit Unwuchten gerechnet werden muß.

Aus der GB-A 1 091 121 ist es bei einer Drehmomentübertragungseinrichtung bekannt, eine Membranscheibe in ihrem radial äußeren Randbereich mit dem radial äußeren Randbereich eines schüsselförmigen Ringkörpers durch Verschweißen zu verbinden. Dabei liegen ein Randflansch des schüsselförmigen Ringkörpers und ein axial gerichteter Ringvorsprung der Membranscheibe mit achsnormalen Kontaktflächen aneinander an. Über die Schweißung ist gesagt, daß sie an der radial äußeren Seite des axial gerichteten Ringvorsprungs angebracht werden soll. Man muß sich also wohl eine ringförmige Schweißraupe vorstellen, die über die Umfangsflächen des schüsselförmigen Ringkörpers einerseits und des axial gerichteten Ringvorsprungs der Membranscheibe andererseits verläuft und den Stoß zwischen den aneinander anliegenden Kontaktflächen überdeckt.

Bei dieser Ausführungsform, die wohlgemerkt nicht für Paarungen von zwei Membranscheiben sondern nur für die Kombination einer Membranscheibe mit einem schüsselförmigen Ringkörper vorgeschlagen worden ist, muß die Festigkeit der Schweißnaht in Zweifel gezogen werden, da mit schwer überschaubaren und für die Schweißverbindung aggressiven Belastungsformen gerechnet werden muß.

Aus einem Aufsatz "Diaphragm couplings challenge disk and gear types for high torque", veröffentlicht in "Product Engineering", June 1977, ist es bekannt, das Elektronenstrahlschweißverfahren bei der Herstellung von mit Membranscheibenpaarungen ausgeführten Drehmomentübertragungseinrichtungen einzusetzen. Dabei wird vorgeschlagen, die Membranscheiben mit Nabenteilen durch Elektronenstrahlschweißen zu verbinden.

Aus der US-A 3 959 988 ist ein Verfahren der eingangs bezeichneten Art bekannt. Dabei werden zwei Membranscheiben, welche auf ihrer ganzen radialen Ausdehnung im wesentlichen konstante Wandstärke haben, in ihren radial äußeren Bereichen mit annähernd planen und achsnormalen Ringzonen aneinandergelegt und hierauf von der Umfangsfläche her miteinander verschweißt. Diese Art der Verbindung kann bei dem speziellen Produkt einer Membrankupplung wegen der dort auftretenden mechanischen Belastungen zu Schwierigkeiten führen. Es ist nicht ausgeschlossen, daß beim Bilden der Schweißnaht die Eindringtiefe des Elektronenstrahls und damit die radiale Erstreckung der Schweißnaht Schwankungen unterliegt. Diese Schwankungen können durch Unregelmäßigkeiten an den Kontaktflächen ebenso hervorgerufen werden wie durch Schwankungen der Beschleunigungsspannung der Elektronenstrahlkanone oder durch Schwankungen der Stromstärke des Elektronenstrahls. Treten solche variierenden Schweißnahttiefen auf, so ist die Kreissymmetrie der Verschweißung gestört. Bei einer Biegebelastung der Membrankupplung tritt eine Überlastung voraussichtlich dort auf, wo eine radial einwärts gerichtete Spitze der Elektronenstrahlschweißnaht vorhanden ist. An dieser Stelle tritt eine Art Kerbspannung auf, die zum Anreißen führen kann. Ein einmal aufgetretener Anriß setzt sich in Umfangsrichtung fort.

Aus der FR-A 1 506 308 ist die Herstellung eines abgedichteten Behälters durch Elektronenstrahlverschweißung bekannt, wobei der Einbau von Dichtungen eine Rolle spielt und wobei die Existenz von Zentrierflächen als Voraussetzung für die Einbaubarkeit der Dichtungen zu verstehen ist. Eine Notwendigkeit der Anbringung von Zentrierflächen ist hierbei nur im Hinblick auf die Dichtungen zu erkennen.

Der Erfindung liegt die Aufgabe zugrunde, bei einem Verfahren der eingangs bezeichneten Art das Kupplungselement so herzustellen, daß es den hohen mechanischen Beanspruchungen, die an der Verbindung der radial äußeren Randbereiche insbesondere dann auftreten, wenn an die Membranscheiben angeschlossene Teile mit Winkelversatz oder Achsparallelversatz zueinander stehen, besser gerecht wird. Insbesondere sollen Kerbwirkungen an der Schweißverbindung vermieden werden.

Zur Lösung dieser Aufgabe wird erfindungsgemäß vorgeschlagen, daß man an einem ersten von zwei Membranscheibenrohlingen – angrenzend an dessen Außenumfangsfläche – einen ringförmigen, zu dem zweiten Membranscheibenrohling hin gerichteten Axialvorsprung ausbildet, dessen axial gerichtete Stirnfläche eine erste Kontaktfläche und dessen radial innere, radial einwärts gerichtete Umfangsfläche eine erste Zentrierfläche bildet, daß man an dem zweiten der beiden Membranscheibenrohlinge – angrenzend an dessen Außenumfangsfläche – eine zur Aufnahme des Axialvorsprungs bemessene Ringausnehmung bildet, deren axial zu dem ersten Membranscheibenrohling hin gerichtete Stirnfläche eine zweite Kontaktfläche bildet und deren radial innere, radial auswärts gerichtete Umfangsfläche eine zweite, der ersten Zentrierfläche im Durchmesser entsprechende zweite Zentrierfläche bildet, daß man die beiden so gebildeten Membranscheiben unter Überlappung der Zentrierflächen bis zum Kontakt der Kontaktflächen zusammensteckt und daß man die Elektronenschweißung von den Außenumfangsflächen ausgehend radial einwärts mindestens bis zu der zweiten Zentrierfläche hin erstreckt.

Die oben erwähnte Aufgabe wird durch die erfindungsgemäße Verfahrensweise in überraschend einfacher Weise gelöst. Wenn die Schweißnaht bis an die zweite Zentrierfläche heranreicht, so sind radial einwärts gerichtete Spitzen der Schweißnaht, die sich dann notwendigerweise in das Fleisch der die radial auswärts gerichtete Zentrierfläche aufweisenden Membranscheibe hinein erstrecken, für das Biegeverhalten zwischen den beiden Membranscheiben irrelevant, und zwar deshalb, weil der Spannungslinienverlauf über den ganzen Umfang gleichmäßig allein durch den bis zu der Zentrierflächenpaarung reichenden Schweißnahtbereich und im übrigen durch die Zentrierflächenpaarung bestimmt ist. Mehr oder minder große Eindringtiefen der Schweißnaht in das Fleisch der die radial auswärts gerichtete Zentrierfläche aufweisenden Membranscheibe beeinflussen deshalb allenfalls noch das Gefüge innerhalb dieser letzteren Membranscheibe, aber nicht das Gefüge der Verbindung.

Nach dem erfindungsgemäßen Verfahren läßt sich die Verbindung zwischen den radial äußeren Randbereichen der Membranscheiben trotz der erheblichen Investitionskosten einer Elektronenstrahlschweißeinrichtung leichter, rascher und kostengünstiger herstellen als eine Verbindung mittels Bolzen. Das Auswuchtproblem bereitet keine wesentlichen Schwierigkeiten. Wenn eine Auswuchtung erforderlich ist, so läßt sich diese durch Abdrehen der radial äußeren Umfangsflächen der Membranscheiben durchführen. Dies ist auch ein entscheidender Vorteil einer Schweißverbindung, wie sie aus GB-A 1 091 121 entnommen werden kann. Bei einer solchen Schweißverbindung mit einer ringsumlaufenden Schweißraupe auf den Umfangsflächen der aneinander anstoßenden Randteile kann zum einen durch das Aufbringen der Schweißraupe Unwucht gebildet werden, zum anderen ist einem Beseitigen solcher Unwucht durch Abdrehen zumindest eine enge Grenze gesetzt, weil durch das Abdrehen ja die die Verbindung herstellende Schweißraupe beseitigt oder geschwächt würde.

Weiter wird nach dem erfindungsgemäßen Verfahren der Vorteil erzielt, daß die radial innere Begrenzung der ringscheibenförmigen Elektronenstrahlschweißzone an den Zentrierflächen der Membranscheiben bzw. innerhalb des Materials der einen Membranscheibe mit der radial auswärts gerichteten Zentrierfläche liegt, so daß keine Schweißwülste im Hohlraum zwischen den Membranscheiben entstehen können, die einer Bearbeitung zum Zwecke der Unwuchtbeseitigung unzugänglich wären.

Dadurch, daß die ringscheibenförmige Elektronenstrahlschweißzone an ihrem radial inneren Rand an den Membranscheiben bzw. innerhalb des Materials der einen die radial auswärts gerichtete Zentrierfläche aufweisenden Membranscheibe liegt, wird außerdem vermieden, daß sich an der Außenumfangsfläche der Randbereich der Membranscheiben eine Einsenkung bei dem Schweißvorgang ergibt. Eine solche Einsenkung würde eine etwaige Unwuchtbehandlung sehr erschweren. Tatsächlich ergibt sich eher ein über die Umfangsfläche leicht erhabener Ringwulst, der zum Zwecke der Unwuchtbeseitigung abgetragen werden kann, ohne daß die Festigkeit der Schweißnaht insgesamt in Frage gestellt wird.

Die Kontaktflächen und die Zentrierflächen können Teile eines im achsenthaltenden Querschnitt gesehen Z-förmigen Stoßes zwischen den radial äußeren Randbereichen der Membranscheiben ausgeführt werden. Die stufenförmige Ausbildung der äußeren Randbereiche beider Membranscheiben zur Bildung eines Z-förmigen Stosses läßt sich auf einfache Weise an üblichen Drehmaschinen gewinnen. Der Z-förmige Stoß gestattet eine exakte Zentrierung der Membranscheiben relativ zueinander, die das Unwuchtproblem von vorneherein zurückdrängt.

Die Membranscheiben können in ihrem radial äußeren Randbereich axial aufeinander zugerichtete Ringvorsprünge mit den Kontaktflächen und den Zentrierflächen aufweisen. Diese Ringvorsprünge gewährleisten auch bei sehr dünnwandigem radial mittlerem Bereich der Membranscheiben, daß zur Herstellung der Verbindung am radial äußeren Rand ausreichend Material zur Verfügung steht.

Die beiden Membranscheiben können aus identischen Membranscheibenrohlingen gebildet werden, welche in den radial äußeren Randbereichen zur Bildung der Kontaktflächen und der Zentrierflächen bearbeitet werden. Natürlich muß die Bearbeitung zusammengehöriger Membranscheiben der komplementären Form zur Bildung des Z-förmigen Stoßes Rechnung tragen. Aber schon die Bereitstellung identischer Membranscheibenrohlinge für beide zusammengehörigen Membranscheiben erweist sich in der Lagerhaltung und in der Kostenrechnung als vorteilhaft.

Die voneinander abgelegenen Stirnflächen werden bevorzugt zumindest in den radial äußeren Randbereichen und in radial mittleren Bereichen achsnormal und plan ausgeführt. Damit besteht die Möglichkeit, diese planen Stirnflächen an ebenso planen Stützflächen von Drehmaschinenläufern abzustützen und dann die spanabhebende Bearbeitung zur Bildung der Kontaktflächen, der Zentrierflächen und ggfs. der Ausnehmungen für die Wandstärkeminderung im radial mittleren Bereich vorzunehmen und damit das geforderte elastische Verhalten zu erreichen. Dies ist von wesentlicher Bedeutung, weil bei fehlender Abstützung die Gefahr einer elastischen Verformung der Membranscheiben während der spanabhebenden Bearbeitung bestünde.

Die Membranscheiben können auch an ihren radial inneren Randbereichen in an sich bekannter Weise mit Anschlußteilen durch Elektronenstrahlschweißung verbunden werden.

Die erfindungsgemäß hergestellten Membranscheibenpaarungen lassen sich in den verschiedensten Formen von Drehmomentübertragungseinrichtungen einsetzen. Nach einer ersten bevorzugten Ausführungsform werden von zwei miteinander fluchtenden Membranscheibenpaarungen die einander zugekehrten Membranscheiben an ihren radial inneren Randbereichen durch eine ggfs. unterteilte, insbesondere torsionselastische und/oder biegeelastische Verbindungwelle verbunden, während mindestens eine der voneinander abgelegenen Membranscheiben mit jeweils einem Wellenanschlußflansch verbunden wird. Eine solche Drehmomentübertragungseinrichtung eignet sich zum Ausgleich von Winkelfluchtfehlern und Achsversatz von miteinander zu verbindenden, rotierenden Maschinenteilen. Dabei kann der Wellenanschlußflansch einen Rohrfortsatz aufweisen, welcher in die Verbindungswelle hineingesteckt wird. Durch diese Maßnahme kann gewährleistet werden, daß im Falle eines Bruchs etwa in der Membranscheibenpaarung die Verbindungswelle nach wie vor durch den Rohrfortsatz in ihrer Lage gesichert bleibt.

Bei einer anderen bevorzugten Ausführungsform einer Drehmomentübertragungseinrichtung werden von zwei miteinander fluchtenden Membranscheibenpaarungen die einander zugekehrten Membranscheiben an ihren radial inneren Randbereichen durch eine ggfs. unterteilte, insbesondere torsionselastische und/oder biegeelastische Verbindungswelle miteinander verbunden, während mindestens eine der voneinander abgelegenen Membranscheiben mit jeweils einer Wellenanschlußnabe versehen wird, welche in die Verbindungswelle hineinragt. Der besondere Vorteil dieser neuartigen Ausführungsform einer Drehmomentübertragungseinrichtung liegt darin, daß die miteinander zu verbindenden Wellen von zusammengehörigen Maschinenteilen bis auf kürzesten Abstand aneinander herangeführt werden können und gleichwohl eine Drehmomentübertragungseinrichtung zwischen diesen Wellen geschaffen wird, welche eine ausreichende Fähigkeit zum Ausgleich von Winkelfluchtfehlern und Achsversatz besitzt.

Bei dem erfindungsgemäßen Verfahren kann in der Weise vorgegangen werden, daß man bei der Elektronenschweißung eine Relativbewegung zwischen einem radial gerichteten Elektronenstrahl und den Membranscheiben um deren Achse ausführt und den Elektronenstrahl in seiner Intensität und/oder Elektronenbeschleunigung derart einstellt, daß er bis zu der radial auswärts gerichteten Zentrierfläche zwischen die Kontaktflächen eindringt oder darüber hinaus in das Material der die radial innere, radial auswärts gerichtete Zentrierfläche aufweisenden Membranscheibe, ohne jedoch dieses Material vollständig zu durchdringen.

Bei diesem Verfahren empfiehlt es sich im Hinblick auf das Elektronenstrahlschweißen, daß man an dem Übergang zwischen der radial auswärts gerichteten Zentrierfläche und der zugehörigen Kontaktfläche eine Übergangsrundung mit einem Radius von weniger als 0,2 mm anformt und daß man die Übergangskante zwischen der radial einwärts gerichteten Zentrierfläche und der zugehörigen Kontaktfläche derart abkantet, daß die Kontaktflächen beim Zusammenschieben der Zentrierflächen unter Minimierung des Hohlraums zwischen der Übergangsrundung und der Abkantung vollflächig zur gegenseitigen Anlage kommen. Durch diese Maßnahme wird verhindert, daß sich im Schweißbereich eine Luftkaverne von größerem Volumen bildet, die für den unter Vakuum durchzuführenden Elektronenstrahlschweißvorgang hinderlich sein könnte.

Eine bevorzugte Methode zur Herstellung einer Membranscheibe für eine erfindungsgemäße Membranscheibenpaarung besteht darin, daß man an einem Scheibenrohling zunächst eine mindestens im radial äußeren Randbereich und im radial mittleren Bereich plane Stirnfläche anformt, daß man diesen Rohling sodann mit der planen Stirnfläche an eine Stützfläche eines Läufers einer Drehmaschine anlegt, daß man sodann an der von der planen Stirnfläche abgelegenen Fläche eine Ausnehmung im radial mittleren Bereich anbringt, wobei im radial äußeren Bereich ein axial gerichteter Ringvorsprung stehen bleibt, und daß man an diesem Ringvorsprung schließlich eine Kontaktfläche sowie eine Zentrierfläche anformt. Auf diese Weise können Membranscheiben geringer Wandstärke und damit hoher elastischer Verformbarkeit bereitgestellt werden und gleichwohl kann die Bearbeitung der Flächen ohne störendes Federn durchgeführt werden.

Die erfindungsgemäßen Membranscheibenpaarungen können als komplette Bauelemente fertiggestellt und als solche mit den Anschlußteilen verbunden werden. Dies ist deshalb eine bevorzugte Art des Vorgehens, weil auf diese Weise nur relativ kleine Baugruppen an der Elektronenstrahlschweißanlage bearbeitet werden müssen.

Es ist aber durchaus auch denkbar, daß man die Membranscheiben der Paarung zunächst mit den Anschlußteilen verbindet und anschließend miteinander durch Schweißen verbindet.

Zur Beseitigung etwaiger Unwucht kann man die gemeinsame Umfangsfläche der miteinander verbundenen Membranscheiben nach der Verschweißung einer spanabhebenden Bearbeitung, insbesondere einem Abdrehen unterwerfen.

Die erfindungsgemäß hergestellten Membranscheibenpaarungen liefern flexible Kupplungen, die immer häufiger insbesondere bei hochtourigen Antrieben benötigt weren, und zwar aus Gründen genereller Forderungen, wie schwingungsfreier Leistungsübertragung, langer Lebensdauer und absoluter Wartungsfreiheit. Die flexiblen Membrankupplungen erfüllen diese Forderungen umfassend aufgrund ihrer besonderen konstruktiven Merkmale: Sie besitzen ein geringes Gewicht infolge der Ganzstahlausführung; sie sind als Kupplung fertigmontiert auswuchtbar; sie sind verschleißfrei und erfordern keine Schmierung. Wo die Antriebsmaschine und das getriebene Aggregat in einem größeren Abstand zueinander stehen, können zwei Membrankupplungen unter Bildung einer Doppelgelenkkupplung verwendet werden. Dadurch erreicht man einen Ausgleich auch von größeren Wellenverlagerungen; darüberhinaus wird eine Verkleinerung der Rückstellkräfte und der damit verbundenen ungünstigen Auswirkungen auf die Lager der Anschlußwellen erreicht.

Die beiliegenden Figuren erläutern die Erfindung anhand von Ausführungsbeispielen.

Es stellen dar:

Figur 1 eine erste Ausführungsform einer erfindungsgemäß hergestellten Drehmomentübertragungseinrichtung im achsenthaltenden Schnitt;

Figur 2 die Verbindungsstelle zwischen den radial äußeren Randbereichen benachbarter Membranscheiben vor der Verschweißung;

Figur 3 die Verbindungsstelle gemäß Figur 2 nach der Verschweißung;

Figuren 4 und 5 zwei weitere Ausführungsformen von erfindungsgemäß hergestellten Drehmomentübertragungseinrichtungen.

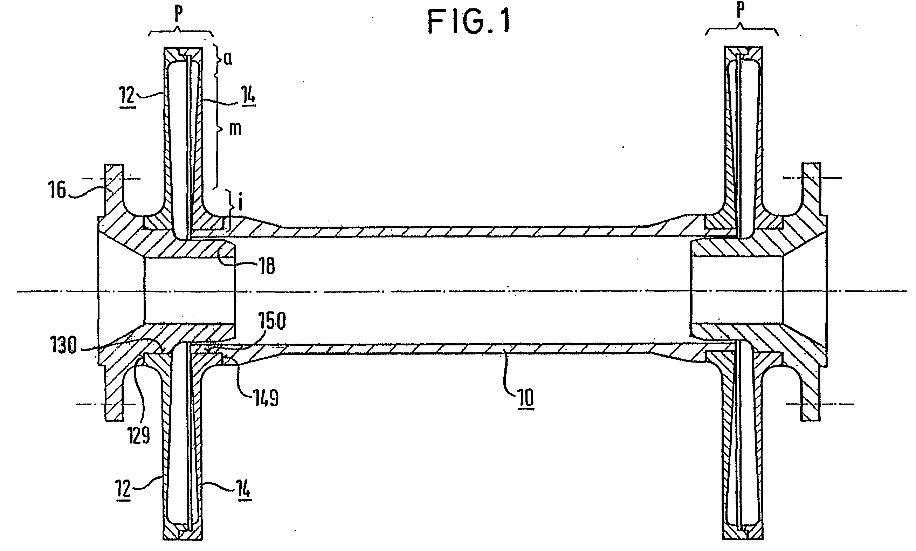

Gemäß Figur 1 ist an den beiden Enden einer ggfs. torsions- und/oder biegeelastischen Verbindungswelle 10 je eine Paarung P von zwei Membranscheiben angebracht, die miteinander identisch sind, so daß die Beschreibung einer dieser Paarungen genügt.

Die Paarung P besteht aus zwei Membranscheiben 12 und 14, die in ihrem radial äußeren Randbereich ringsum miteinander verbunden sind. Die Membranscheibe 14 ist an ihrem radial inneren Randbereich mit der Verbindungswelle 10 verbunden, beispielsweise durch Elektronenstrahlschweißung. Die Membranscheibe 12 ist an ihrem radial inneren Randbereich mit einem Wellenanschlußflansch 16 verbunden, der einstückig mit einem Rohrfortsatz 18 hergestellt ist. Der Rohrfortsatz 18 reicht so weit in die Verbindungswelle 10 hinein, daß er die Verbindungswelle radial stützen kann, wenn in einer der Membranscheiben 12, 14 oder in der Verbindung dieser Membranscheiben 12, 14 mit dem Wellenanschlußflansch bzw. der Verbindungswelle 10 ein Bruch eintreten sollte.

In Figur 1 sind die einzelnen radial aneinander anschließenden Ringbereiche der Membranscheiben, nämlich der radial äußere Randbereich, der radial innere Randbereich und der radial mittlere Bereich, mit a bzw. i bzw. m bezeichnet.

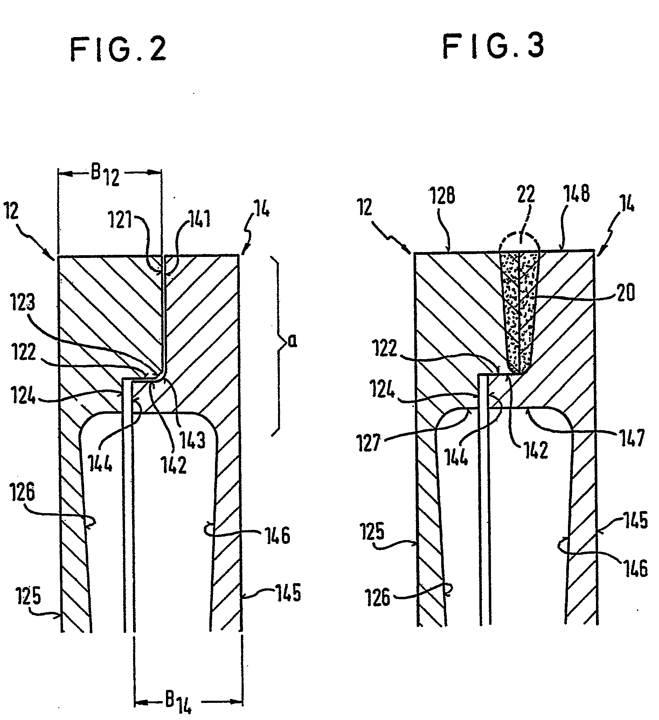

In Figur 2 ist lediglich der radial äußere Randbereich a der beiden Membranscheiben 12 und 14 dargestellt. Die Membranscheibe 14 weist im radial äußeren Randbereich a eine Kontaktfläche 141 und eine radial äußere Zentrierfläche 142 auf. Die Membranscheibe 12 weist eine Kontaktfläche 121 und eine radial innere Zentrierfläche 122 auf. Die radial äußere Zentrierfläche 142 geht in die zugehörige Kontaktfläche 141 über eine Übergangsrundung 143 mit einem Radius von 0,2 mm über. Am Übergang von der radial inneren Zentrierfläche 122 zur Kontaktfläche 121 befindet sich eine Abkantung 123, die so auf die Übergangsrundung 143 abgestimmt ist, daß das Einschlußvolumen zwischen den Flächen 123 und 143 minimal ist, andererseits aber die Kontaktflächen 121 und 141 satt aneinander anliegen.

Die Breiten $B_{12}$ und $B_{14}$ der Membranscheiben 12 und 14 im radial äußeren Randbereich a sind, wie aus Figur 2 ersichtlich, einander gleich. Dies bedeutet, daß man an den Rohlingen, deren Breite über den ganzen radial äußeren Randbereich a jeweils $B_{12}$ bzw. $B_{14}$ beträgt, nur Stufen in die Membranscheiben 12 und 14 einzuarbeiten braucht, um die Kontaktflächen 121 und 141 sowie die Zentrierflächen 122 und 142 zu erhalten.

Die Kontaktflächen 121 und 141, die Zentrierflächen 122 und 142 und weitere einander in Achsrichtung gegenüberliegende Flächen 124, 144 bilden einen Z-förmigen Stoß zwischen den beiden Membranscheiben 12 und 14 in deren radial äußerem Bereich a.

Die Herstellung der Membranscheiben 12, 14 erfolgt vorzugsweise aus geschmiedeten Rohlingen durch spanabhebende Bearbeitung. Dabei werden die Membranscheiben 12 und 14 zunächst mit achsnormalen, planen Stirnflächen 125, 145 versehen, so daß die Rohlinge dann auf dem Läufer einer nicht eingezeichneten Drehmaschine aufgespannt und in Achsrichtung satt abgestützt werden können. Dann werden an den Rohlingen die Stufen abgetragen, welche die Zentrierflächen 122, 142 ergeben. Weiterhin können bei dieser Einspannung die einander zugekehrten, leicht konischen Stirnflächen 126 und 146 gebildet werden. Diese Stirnflächen haben einen solchen Verlauf, daß die Wandstärke der Membranscheiben im radial mittleren Bereich m von radial außen nach radial innen zunimmt. Das Abdrehen der die Flächen 122, 142 und 141, 124 bildenden Stufen sowie der konischen Stirnflächen 126, 146 kann also erfolgen, ohne daß ein Federn der Membranscheiben zu befürchten ist.

Gemäß Figur 3 sind die Membranscheiben 12 und 14 durch Elektronenstrahlschweißen miteinander verschweißt, wobei im Bereich der Kontaktflächen 121, 141 eine ringscheibenförmige Elektronenstrahlschweißzone 20 entstanden ist, die radial einwärts bis zu den Zentrierflächen 122, 142 reicht oder darüber hinaus, jedoch in jedem Fall radial auswärts der Innenumfangsflächen 127, 147 der Membranscheiben 12, 14 im Material der Membranscheibe 14 endet. Beim Verschweißen der beiden Membranscheiben 12 und 14 kann sich an den Außenumfangsflächen 128, 148 der Membranscheiben 12, 14 eine Schweißraupe 22 bilden, die zu Unwuchten führen kann, wenn sie ungleichmäßig ist. Diese Schweißraupe läßt sich ohne Gefährdung der Verschweißung abdrehen. Nicht zu befürchten ist bei Einhaltung der oben angegebenen Schweißbedingungen, daß sich beim Elektronenstrahlschweißen in den Außenumfangsflächen 128, 148 der Membranscheiben 12, 14 eine Senke im Bereich der Elektronenstrahlschweißzone 20 ergibt.

Nach dem Verbinden der beiden Membranscheiben 12 und 14 können diese zu der Drehmomentübertragungseinrichtung gemäß Figur 1 zusammengebaut werden, wobei dann ein Verschweißen allerdings nur im Bereich der achsnormalen Stöße 129, 149 möglich ist.

Andererseits ist es auch denkbar, die Membranscheiben 12 und 14 zuerst mit dem Wellenanschlußflansch 16 bzw. der Verbindungswelle 10 zu verschweißen und danach die Elektronenstrahlschweißung bei 20 vorzunehmen. In diesem Fall ist auch eine Schweißnaht im Bereich der Zentrierstöße 130, 150 möglich.

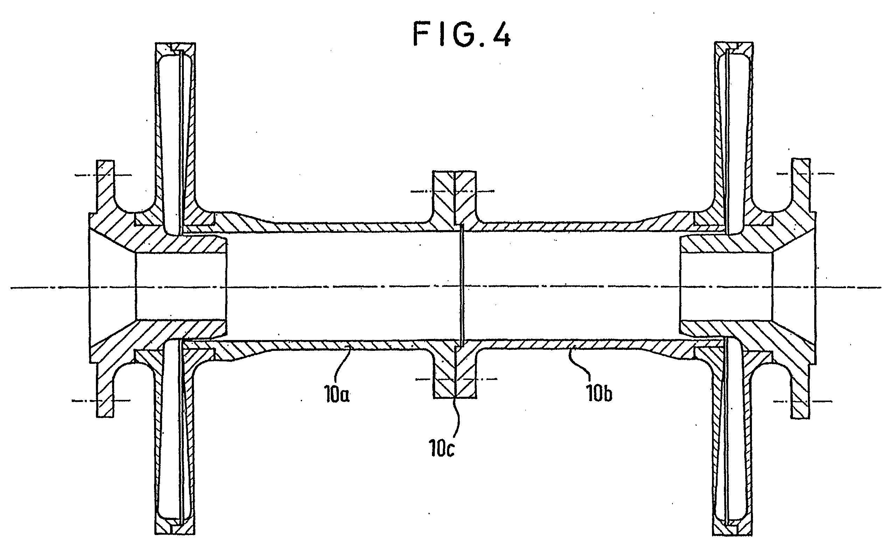

Die Ausführungsform der Figur 4 unterscheidet sich von derjenigen nach Figur 1 lediglich dadurch, daß die Verbindungswelle 10 in zwei Teilwellen 10a und 10b unterteilt ist, welche durch eine Flanschverbindung 10c miteinander verbunden sind.

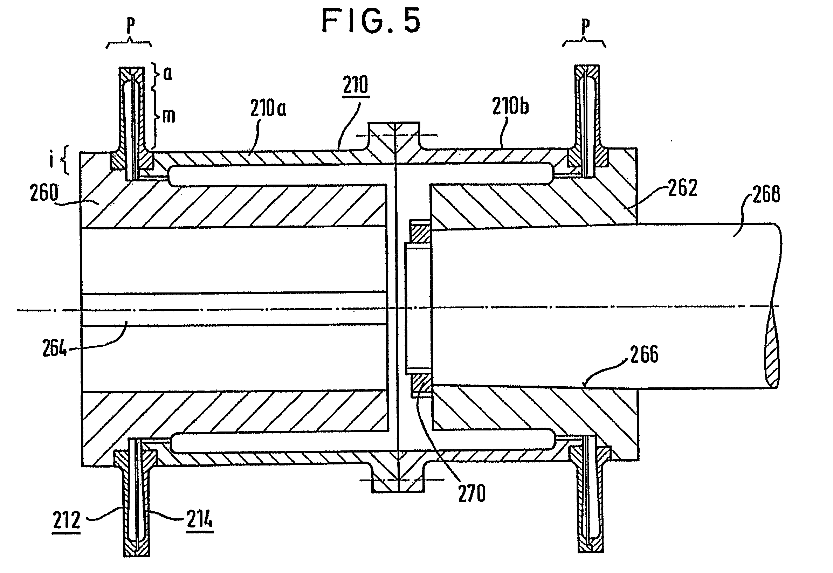

In Figur 5 sind analoge Teile mit gleichen Bezugszeichen versehen wie in Figur 1, jeweils vermehrt um die Zahl 200. Die einander zugekehrten Membranscheiben der beiden Membranscheibenpaare P, P sind durch eine ggfs. torsions- und/oder biegeelastische Verbindungswelle 210, welche von zwei Teilwellen 210a und 210b gebildet ist, miteinander verbunden. Die voneinander abgewandten Membranscheiben der beiden Membranscheibenpaarungen P, P sind mit Naben 260 bzw. 262 verbunden. Die Naben 260 und 262 reichen in die Verbindungswelle 210 hinein und haben mit ihren inneren Enden nur kurzen Abstand voneinander. Die Nabe 260 ist mit einer Keilnut 264 versehen, um eine Welle mit Keil-Keilnutenverbindung aufzunehmen. Die Nabe 262 ist mit einem Innenkonus 266 versehen und nimmt eine Welle 268 auf, die durch eine Mutter 270 gegen die Nabe 262 verspannt ist.

Diese Ausführungsform ist deshalb besonders interessant, weil die Wellen zweier aneinander anzuschließender Maschinenteile, von denen nur die Welle 268 gezeigt ist, bis in unmittelbare Nähe aneinander herangeführt werden können und trotzdem über die Membranscheibenpaarungen P und die ggfs. torsions- und biegeelastische Welle 210 eine Ausgleichsmöglichkeit für Winkelversetzungen und Parallelversetzungen der Wellen besteht.

Zu der Ausbildung der ringscheibenförmigen Elektronenstrahlschweißzone ist noch nachzutragen, daß diese auch gegen Korrosion an ihrem radial inneren Umfang geschützt ist, indem sie mit ihrem radial inneren Umfang entweder gegen die äußere Zentrierfläche 142 (Figur 2) angrenzt oder in das Material der Membranscheibe 14 eintaucht.

Zur Herstellung der Membranscheiben aus identischen Membranscheibenrohlingen läßt sich zusätzlich zu den bereits genannten Vorteilen noch feststellen, daß damit auch der Einsatz weitgehend gleicher Vorrichtungen und gleicher NC-Programme für die Herstellung des biegeweichen Membranbereichs ermöglicht wird.

## Patentansprüche

1. Verfahren zur Herstellung eines biegeelastischen Kupplungselements einer Drehmomentübertragungseinrichtung, bei dem zwei Membranscheiben (12, 14) in axialer Richtung miteinander fluchtend derart gegeneinandergelegt werden, daß sie im radial äußeren Randbereich (a) mit achsnormalen an die zugehörigen Außenumfangsflächen (128, 148) angrenzenden Kontaktflächen (121, 141) aneinander anliegen, und bei dem anschließend diese beiden Kontaktflächen (121, 141) im Elektronenstrahlschweißverfahren miteinander verschweißt werden, dadurch gekennzeichnet, daß man an einem ersten von zwei Membranscheibenrohlingen – angrenzend an dessen Außenumfangsfläche (128) – einen ringförmigen, zu dem zweiten Membranscheibenrohling hin gerichteten Axialvorsprung ausbildet, dessen axial gerichtete Stirnfläche eine erste Kontaktfläche (121) und dessen radial innere, radial einwärts gerichtete Umfangsfläche (122) eine erste Zentrierfläche bildet, daß man an dem zweiten der beiden Membranscheibenrohlinge – angrenzend an dessen Außenumfangsfläche (148) – eine zur Aufnahme des Axialvorsprungs bemessene Ringausnehmung bildet, deren axial zu dem ersten Membranscheibenrohling hin gerichtete Stirnfläche eine zweite Kontaktfläche (141) bildet und deren radial innere, radial auswärts gerichtete Umfangsfläche (142) eine zweite, der ersten Zentrierfläche (122) im Durchmesser entsprechende zweite Zentrierfläche (142) bildet, daß man die beiden so gebildeten Membranscheiben (12, 14) unter Überlappung der Zentrierflächen (122, 142) bis zum Kontakt der Kontaktflächen (121, 141) zusammensteckt und daß man die Elektronenschweißung (20) von den Außenumfangsflächen (128, 148) ausgehend radial einwärts mindestens bis zu der zweiten Zentrierfläche (142) hin erstreckt.

2. Verfahren nach Anspruch 1, dadurch gekennzeichnet, daß man die Kontaktflächen (121, 141) und die Zentrierflächen (122, 142) als Teile eines – im achsenthaltenden Querschnitt gesehen – Z-förmigen Stoßes (121, 141; 122, 142; 124, 144) zwischen den radial äußeren Randbereichen (a) der Membranscheiben (12, 14) ausbildet.

3. Verfahren nach Anspruch 1 oder 2, dadurch gekennzeichnet, daß die Membranscheiben (12, 14) in ihrem radial äußeren Randbereich (a) mit aufeinanderzugerichteten Ringvorsprüngen ($B_{12}$, $B_{14}$) ausgeführt werden, an deren einem der Axialvorsprung und an deren anderem die Ringausnehmung ausgebildet werden.

4. Verfahren nach einem der Ansprüche 1 bis 3, dadurch gekennzeichnet, daß die beiden Membranscheiben (12, 14) aus identischen Membranscheibenrohlingen gebildet werden.

5. Verfahren nach einem der Ansprüche 1 bis 4, dadurch gekennzeichnet, daß die beiden Membranscheiben (12, 14) mit voneinander abgelegenen Stirnflächen (125, 145) ausgeführt werden, welche zumindest in den radial äußeren Randbereichen (a) und in radial mittleren Bereichen (m) achsnormal und plan gestaltet werden.

6. Verfahren nach einem der Ansprüche 1 bis 5, dadurch gekennzeichnet, daß die Membranscheiben (12, 14) an ihren radial inneren Randbereichen (i) mit Anschlußteilen (16, 10) durch Elektronenstrahlschweißung verbunden werden.

7. Verfahren nach einem der Ansprüche 1 bis 6, dadurch gekennzeichnet, daß von zwei miteinander fluchtenden Membranscheibenpaarungen (P, P) die einander zugekehrten Membranscheiben (14) an ihren radial inneren Randbereichen (i) durch eine ggf. unterteilte, insbesondere torsions- und/oder biegeelastische Verbindungswelle (10) verbunden werden, während mindestens eine der voneinander abgelegenen Membranscheiben (12) mit einem Wellenanschlußflansch (16) versehen wird.

8. Verfahren nach Anspruch 7, dadurch gekennzeichnet, daß der Wellenanschlußflansch (16) mit einem Rohrfortsatz (18) in die Verbindungswelle (10) hineingesteckt wird.

9. Verfahren nach einem der Ansprüche 1 bis 8, dadurch gekennzeichnet, daß von zwei miteinander fluchtenden Membranscheibenpaarungen (P, P) die einander zugekehrten Membranscheiben (214) an ihren radial inneren Randbereichen (i) durch eine ggf. unterteilte, insbesondere torsions- und/oder biegeelastische Verbindungswelle (210) verbunden werden, während mindestens eine der voneinander abgelegenen Membranscheiben (212) mit einer Wellenanschlußnabe (260, 262) in die Verbindungswelle (210) hineingesteckt wird.

10. Verfahren nach einem der Ansprüche 1 bis 9, dadurch gekennzeichnet, daß man bei der Elektronenschweißung eine Relativbewegung zwischen einem radial gerichteten Elektronenstrahl und den Membranscheiben (12, 14) um deren Achse ausführt und den Elektronenstrahl in seiner Intensität und/oder Elektronenbeschleunigung derart einstellt, daß er bis zu der radial auswärts gerichteten Zentrierfläche (142) zwischen die Kontaktflächen (121, 141) eindringt oder darüber hinaus in das Material der die radial innere, radial auswärts gerichtete Zentrierfläche (142) aufweisenden Membranscheibe (114), ohne jedoch dieses Material vollständig zu durchdringen.

11. Verfahren nach einem der Ansprüche 1 bis 10, dadurch gekennzeichnet, daß man an dem Übergang zwischen der radial inneren, radial auswärts gerichteten Zentrierfläche (142) und der zugehörigen Kontaktfläche (141) eine Übergangsrundung (143) mit einem Radius von weniger als 0,2 mm anformt und daß man die Übergangskante zwischen der radial inneren, radial einwärts gerichteten Zentrierfläche (122) und der zugehörigen Kontaktfläche (121) derart abkantet (bei 123), daß die Kontaktflächen (121, 141) beim Übereinanderschieben der Zentrierflächen (122, 142) unter Minimierung des Hohlraums zwischen Übergangsrundung (143) und Abkantung (123) vollflächig zur gegenseitigen Anlage kommen.

12. Verfahren nach einem der Ansprüche 5 bis 11, dadurch gekennzeichnet, daß man an einem Scheibenrohling zunächst die zumindest im radial äußeren Randbereich (a) und im radial mittleren Bereich (m) plane Stirnfläche (125) anformt, daß man diesen Membranscheibenrohling sodann mit der planen Stirnfläche (125) an eine Stützfläche eines Läufers einer Drehmaschine anlegt, daß man an der von der planen Stirnfläche (125) abgelegenen Fläche sodann eine Zentralausnehmung (126) im radial mittleren Bereich (m) anbringt, wobei im radial äußeren Randbereich (a) ein axial gerichteter Ringvorsprung (B₁₂, B₁₄) stehen bleibt, und daß man an diesem Ringvorsprung (B₁₂, B₁₄) eine Kontaktfläche (121, 141) sowie eine Zentrierfläche (122, 142) anformt.

13. Verfahren nach einem der Ansprüche 1 bis 12, dadurch gekennzeichnet, daß man eine Membranscheibenpaarung (P) als komplettes Bauelement fertigstellt und als solches mit Anschlußteilen (16, 10) verbindet.

14. Verfahren nach einem der Ansprüche 1 bis 12, dadurch gekennzeichnet, daß man die Membranscheiben (12, 14) einer Paarung zunächst mit Anschlußteilen (16, 10) verbindet und anschließend miteinander verbindet.

15. Verfahren nach einem der Ansprüche 1 bis 14, dadurch gekennzeichnet, daß man die gemeinsame Umfangsfläche (128, 148) der miteinander verbundenen Membranscheiben (12, 14) nach der Verschweißung einer spanabhebenden Bearbeitung unterwirft.

**Claims**

1. A method of producing a resiliently elastic coupling element of a torque transmission means, in which two membrane discs (12, 14) are so placed in opposition to each other and are so aligned in an axial direction that they rest on each other in their radially outer marginal portion (a) with axially perpendicular contact faces (121, 141) bearing on the associated outer peripheral faces (128, 148), and wherein these two contact faces (121, 141) are subsequently welded together by an electron beam welding process, characterised in that on a first of two membrane disc blanks – adjacent the outer peripheral surface (128) thereof – there is formed, pointing towards the second membrane disc blank, an annular axial projection, of which the axially directed end face forms a first contact face (121) while the radially inner radially inwardly directed peripheral face (122) forms a first centring face and in that there is formed on the second of the two membrane disc blanks – adjacent to the outer peripheral face (148) thereof – an annular recess which is dimensioned to accommodate the axial projection and of which the end face which is directed axially towards the first membrane disc blank forms a second contact face (141), its radially inner, radially outwardly directed peripheral face (142) forming a second centring face (142) corresponding in its diameter to the first centring face (122) and in that the two membrane discs (12, 14) which are thus formed are fitted together so that the centring faces (122, 142) overlap and until the contact faces (121, 141) come in contact with each other and in that the electron beam welding (20) extends from the outer peripheral faces (128, 148) radially inwardly and at least as far as the second centring face (142).

2. A method according to Claim 1, characterised in that the contact faces (121, 141) and the centring faces (122, 142), viewed in the cross-section which contains the axis, are constructed as parats of a Z-shaped joint (121, 141; 122, 142; 124, 144) between the radially outer marginal portions (a) of the diaphragm discs (12, 14).

3. A method according to Claim 1 or 2, characterised in that the membrane discs (12, 14) are in their radially outer marginal portion (a) constructed with mutually facing annular projections (B₁₂, B₁₄), the axial projection being constructed on one of them while the annular recess is constructed on the other.

4. A method according to one of Claims 1 to 3, characterised in that the two membrane discs (12, 14) are formed from identical membrane disc blanks.

5. A method according to one of Claims 1 to 4, characterised in that the two membrane discs (12, 14) are constructed with end faces (125, 145) which are remote from each other and which, at least in the radially outer marginal portions (a) and in radially central portions (m), are axially perpendicular and plane.

6. A method according to one of Claims 1 to 5, characterised in that on their radially inner marginal portions (i), the membrane discs (12, 14) are connected to connecting members (16, 10) by electron beam welding.

7. A method according to one of Claims 1 to 6, characterised in that of two aligend pairings of membrane discs (P, P), the facing membrane discs (14) are conncected on their radially inner marginal portions (i) by a possibly subdivided and in particular torsion and/or flexurally resilient connecting shaft (10), while at least one of the remote membrane discs (12) is provided with a shaft connection flange (16).

8. A method according to Claim 7, characterised in that the shaft connection flange (16) has a tubular extension (18) which fits into the connecting shaft (10).

9. A method according to one of Claims 1 to 8, characterised in that of two aligned membrane disc pairings (P, P), the facing membrane discs (214) are at their radially inner marginal portions (i) connected by a possibly subdivided and in particular torsion and/or flexurally resilient connecting shaft (210) while at least one of the remote membrane discs (212) has a shaft connection hub (260, 262) which is fitted into the connecting shaft (210).

10. A method according to one of Claims 1 to 9, characterised in that during electron welding, a relative movement is performed between a radially directed electron beam and the membrane discs (12, 14) about the axis thereof, the intensity of the electron beam and/or the electron acceleration being so adjustable that it penetrates between the contact faces (121, 141) as far as the radially outwardly directed centring face (142) or beyond and into the material of the membrane disc (114) which carries the radially inner radially outwardly directed centring face (142), without however completely penetrating the said material.

11. A method according to one of Claims 1 to 10, characterised in that at the transition between the radially inner radially outwardly directed centring face (142) and the associated contact face (141) there is a rounded transition (143) with a radius of less than 0.2 mm, the transitional edge between the radially inner, radially inwardly directed centring face (122) and the associated contact face (121) being so angled (at 123), that when the centring faces (122, 142) are fitted over each other, the contact faces (121, 141) have their full surface area bearing one on the other to minimise the cavity between the rounded transition (143) and the angled or chamfered edge (123).

12. A method according to one of Claims 5 to 11, characterised in that on one disc blank firstly the plane end face (125) is formed at least in the radially outer marginal zone (a) and in the radially central zone (m), and in that this membrane disc blank is then positioned with the plane end face (125) applied to a supporting surface of a traveller of a lathe and in that on the surface remote from the plane end face (125), a central recess (126) is made in the radially central zone (m), an axially directed annular projection (B12, B14) remains in the radially outer marginal zone (a) and in that a contact face (121, 141) as well as a centring face (122, 142) is formed on this annular projection (B12, B14).

13. A method according to one of Claims 1 to 12, characterised in that a pair (P) of membrane discs are produced as a complete component and as such are connected to connection members (16, 10).

14 A method according to one of Claims 1 to 12, characterised in that membrane discs (12, 14) of a pairing are first connected to connection members (16, 10) and are then connected to each other.

15. A method according to one of Claims 1 to 14, characterised in that following the welding, the common peripheral face (128, 148) of the connected membrane discs (12, 14) is subjected to a cutting type of machining process.

**Revendications**

1. Procédé de fabrication d'un élément d'accouplement élastique en flexion d'un dispositif de transmission d'un couple de rotation, selon lequel deux disques-diaphragmes (12, 14) sont appliqués l'un contre l'autre en alignement dans le sens axial de telle sorte qu'ils s'appuient l'un contre l'autre dans leur région de bord radialement extérieure (a) par des faces de contacts (121, 141) perpendiculaires au sens axial, contiguës des faces périphériques extérieures correspondantes (128, 148), et selon lequel ces deux faces de contacts (121, 141) sont ensuite soudées l'une à l'autre par un procédé de soudage par bombardement électronique, caractérisé en ce qu'on forme sur une première de deux ébauches de disques-diaphragmes, en contiguïté à sa face périphérique extérieure (128), un épaulement axial annulaire, dirigé vers la deuxième ébauche de disque-diaphragmes, dont la face frontale tournée dans le sens axial forme une première face de contact (121) et dont la face périphérique (122) radialement intérieure, tournée radialement vers i'intérieur, forme une première face de centrage, en ce qu'on forme sur la deuxième ébauche de disque-diaphragme, en contiguïté à sa face périphérique extérieure (148), un évidement annulaire dimensionné de manière à recevoir l'épaulement axial, dont la face frontale tournée axialement vers la première ébauche de disque-diaphragme forme une deuxième face de contact (141), et dont la face périphérique (142) radialement intérieure, tournée radialement vers l'extérieur, forme une deuxième face de centrage (142) de diamètre correspondant à la première face de centrage (122), en ce qu'on enfonce l'un dans l'autre les deux disques-diaphgrames (12, 14) ainsi formés, par recouvrement des faces de centrage (122, 142) jusqu'à ce que les faces de contact (121, 141) entrent en contact, et en ce qu'on fait s'étendre la soudure électronique (20), en partant des faces périphériques extérieures (122, 148), radialement vers l'intérieur au moins jusqu'à la deuxième face de centrage (142).

2. Procédé selon la revendication 1, caractérisé en ce qu'on conforme les faces de contact (121, 141) et les faces de centrage (122, 142) en tant que parties d'un joint (121, 141; 122, 142; 124, 144) entre les régions de bords radialement extérieures (a) des disques-diaphragmes (12, 14) qui est, vu dans la coupe transversale contenant l'axe, en forme de Z.

3. Procédé selon la revendication 1 ou 2, caractérisé en ce que les disques-diaphragmes (12, 14) sont réalisés, dans leur région de bord radialement extérieure (a), avec des épaulements annulaires ($B_{12}$, $B_{14}$) tournés l'un vers l'autre, sur l'un desquels est formé l'épaulement axial, et sur l'autre l'évidement annulaire.

4. Procédé selon l'une des revendications 1 à 3, caractérisé en ce que les deux disques-diaphragmes (12, 14) sont formés à partie d'ébauches identiques de disques-diaphragmes.

5. Procédé selon l'une des revendications 1 à 4, caractérisé en ce que les deux disques-diaphragmes (12, 14) sont réalisés avec des faces frontales éloignées l'une de l'autre (125, 145) qui sont conformées planes et perpendiculaires à l'axe au moins dans les régions de bords radialement extérieures (a) et dans les régions radialement médianes (m).

6. Procédé selon l'une des revendications 1 à 5, caractérisé en ce que les disques-diaphragmes (12, 14) sont assemblés, au niveau de leurs régions de bords radialement intérieures (i), par des pièces d'assemblage (16, 10), par soudage par bombardement électronique.

7. Procédé selon l'une des revendications 1 à 6, caractérisé en ce que les disques-diaphragmes tournés l'un vers l'autre (14) de deux paires de disques-diaphragmes en alignement l'une avec l'autre (P, P) sont assemblés, au niveau de leurs régions de bords radialement intérieures (i), par un arbre d'assemblage (10) éventuellement divisé et notamment élastique en torsion et/ou en flexion, tandis qu'au moins un des disques-diaphragmes éloignés l'un de l'autre (12) est muni d'une bride d'assemblage d'arbre (16).

8. Procédé selon la revendication 7, caractérisé en ce que la bride d'assemblage d'arbre (16) est emmanchée dans l'arbre d'assemblage (10) par un prolongement tubulaire (18).

9. Procédé selon l'une des revendications 1 à 8, caractérisé en ce que les disques-diaphragmes tournés l'un vers l'autre (214) de deux paires de disques-diaphgrames en alignement l'une avec l'autre (P, P) sont assemblés, au niveau de leurs régions de bords radialement intérieures (i), par un arbre d'assemblage (210) éventuellement divisé et notamment élastique en torsion et/ou en flexion, tandis qu'au moins un des disques-diaphragmes éloignés l'un de l'autre (212) est emmanché dans l'arbre d'assemblage (210) par un moyeu d'assemblage d'arbre (260, 262).

10. Procédé selon l'une des revendications 1 à 9, caractérisé en ce qu'on réalise, lors du soudage électronique, un déplacement relatif entre un faisceau électronique et les disques-diaphragmes (12, 14) autour de leur axe, et l'on règle l'intensité et/ou l'accélération électronique du faisceau électronique de façon qu'il pénètre entre Les faces de contact (121, 141) jusqu'à la face de centrage (142) tournée radialement vers l'extérieur ou, au-delà, dans le matériau de la face de centrage (142) radialement intérieure, tournée radialement vers l'extérieur, sans toutefois traverser totalement ce matériau.

11. Procédé selon l'une des revendications 1 à 10, caractérisé en ce qu'on forme, à la transition entre la face de centrage (142) radialement intérieure, tournée radialement vers l'extérieur, et la face de contact correspondante (141), un arrondi de transition (143) d'un rayon inférieur à 2 mm, et en ce qu'on chanfreine (en 123) l'arête de transition entre la face de centrale (122) radialement intérieure, tournée radialement vers l'intérieur et la face de contact correspondante (121), de telle sorte que, lorsque les faces de centrage (122, 142) glissent l'une sur l'autre, les faces de contact (121, 141) viennent s'appliquer l'une contre l'autre sur toute la surface, la cavité entre l'arrondi de transition (143) et le chanfrein (123) étant minimisée.

12. Procédé selon l'une des revendications 5 à 11, caractérisé en ce qu'on forme tout d'abord, sur une ébauche de disque, la face frontale (125) plane au moins dans la région de bord radialement extérieure (a) et dans la région radialement médiane (m), en ce qu'on place ensuite cette ébauche de disque-diaphragme avec la face frontale plane (125) sur une face de soutien d'un élément rotatif d'un tour, en ce qu'on pratique ensuite un évidement central (126) dans la région radialement médiane (m) de la face opposée à la face frontale plane (125), un épaulement annulaire ($B_{12}$, $B_{14}$) dirigé dans le sens axial restant présent dans la partie de bord radialement extérieur (a), et en ce qu'on forme sur cet épaulement annulaire ($B_{12}$, $B_{14}$) une face de contact (121, 141) ainsi qu'une face de centrage (122, 142).

13. Procédé selon l'une des revendications 1 à 12, caractérisé en ce qu'on réalise une paire (P) de disques-diaphragmes en tant qu'élément constructif complet, et on l'assemble à des pièces d'assemblage (16, 10).

14. Procédé selon l'une des revendications 1 à 12, caractérisé en ce qu'on assemble tout d'abord les disques-diaphragmes (12, 14) d'une paire à des pièces d'assemblage (16, 10), puis on les assemble l'un à l'autre.

15. Procédé selon l'une des revendications 1 à 14, caractérisé en ce qu'on soumet la face périphérique commune (128, 148) des disques-diaphragmes (12, 14) assemblés entre eux, à la suite du soudage, à un usinage par enlèvement de matière.

FIG.1

# FIG.2

# FIG.3

# FIG.4

10a

10c

10b

EP 0 211 090 B1

# FIG.5

EP 0 211 090 B1